# EUROPÄISCHE PATENTSCHRIFT

(11) **EP 2 240 365 B1**
(45) Veröffentlichungstag und Bekanntmachung des Hinweises auf die Patenterteilung: **04.07.2012**
(21) Anmeldenummer: 08866338.0
(22) Anmeldetag: 30.12.2008
(51) Int. Cl.: B64C 13/26

(54) **SYSTEM ZUR BETÄTIGUNG VON ZUMINDEST EINER STELLKLAPPE EINES FLUGZEUGS SOWIE EIN VERFAHREN ZUR ÜBERPRÜFUNG DES SYSTEMS**
SYSTEM FOR ACTUATING AT LEAST ONE REGULATING FLAP OF AN AIRCRAFT AND A METHOD FOR CHECKING THE SYSTEM
SYSTÈME PERMETTANT D'ACTIONNER AU MOINS UN CLAPET DE RÉGLAGE D'UN AVION ET PROCÉDÉ DE CONTRÔLE DU SYSTÈME

(30) Priorität: 30.12.2007 US 17730 P; 30.12.2007 DE 102007063157
(43) Veröffentlichungstag der Anmeldung: 20.10.2010
(73) Patentinhaber: Airbus Operations GmbH, 21129 Hamburg (DE)
(72) Erfinder: HEINTJES, Mark, 28844 Weyhe (DE)
(74) Vertreter: Schatt, Markus F.
(86) Internationale Anmeldenummer: PCT/EP2008/011151
(87) Internationale Veröffentlichungsnummer: WO 2009/083261

(56) Entgegenhaltungen:
- WO-A-98/00334
- WO-A-2005/047108
- WO-A-2007/068413
- US-A- 3 662 550
- US-A- 4 521 060

## Beschreibung

Die Erfindung betrifft ein System zur Betätigung von zumindest einer Stellklappe an jeweils einem Flügel eines Flugzeugs sowie ein Verfahren zur Überprüfung des Klappen-Betätigungssystems. Die Erfindung betrifft insbesondere ein Hochauftriebssystem zur Betätigung von zumindest einer Hochauftriebsklappe an einem Flügel eines Flugzeugs sowie ein Verfahren zur Überprüfung des Hochauftriebsklappen-Betätigungssystems.

Das Dokument WO 2007/068413 beschreibt ein Verfahren und eine Vorrichtung zur automatischen Lastabminderung bei einem Hochauftriebssystem eines Flugzeugs.

Aus dem allgemeinen Stand der Technik ist bekannt, dass die einzelnen Hochauftriebsflächen, auch Vorflügel-Klappen (Slats) oder Hinterkanten-Klappen (Flaps) genannt, von einem System mit einem zentralen Motor verstellt werden. Dabei treibt der zentrale Motor eine längs des Flügels verlaufende Antriebswelle, die das Antriebsmoment zu den einzelnen Stellgetrieben (Aktuatoren) an die Vorflügel-Klappen oder Hinterkanten-Klappen überträgt.

Das Hochauftriebssystem kann derart gestaltet sein, dass vorbestimmte Fehler, die im System auftreten, kompensiert werden können, ohne die Sicherheit des Flugzeugs zu gefährden. Dazu ist insbesondere der Einbau von Bremsen und Sensorik zur Erkennung eines Fehlers und/oder sekundäre tragende Elemente vorgesehen, um die Hochauftriebsflächen in einer definierten Position zu halten. Sind zwei Aktuatoren an eine Verstellklappe angekoppelt und ist jeder Aktuator mit einem einzelnen Lastpfad ausgestattet, kann zur Kompensation eines strukturellen Versagens eines der beiden Aktuatoren der jeweils andere Aktuator die Hochauftriebsfläche in ihrer momentanen Position arretieren. Werden mehrere Stellklappen an demselben Flügel mit jeweils zwei Aktuatoren mit einem einzelnen Lastpfad verstellt, kann eine sekundäre Klappen-Verbindungsstrebe vorgesehen sein, der die zwei Hochauftriebsklappen derart koppelt, dass bei einem Versagen eines Aktuators einer Stellklappe die Stellklappe über diese Klappen-Verbindungsstrebe von der jeweils anderen Stellklappe gehalten wird, so dass die Last der defekten Stellklappe in die benachbarte Stellklappe übertragen wird.

Bei diesem Hochauftriebssystem bildet die sekundäre Klappen-Verbindungsstrebe einen zweiten Lastpfad für den Fall, dass ein Aktuator versagt, d.h. einen Defekt aufweist. Das System wird im Normalbetrieb durch Bremsen im Zentralantrieb in Position gehalten. Wenn z.B. der Bruch einer Transmissionswelle eintritt, wird das System von den im rechten und linken Flügel außen liegenden Sicherheitsbremsen (,Wing Tip Brakes') angehalten.

Die Aufgabe der Erfindung ist, ein System zur Betätigung von zumindest einer Stellklappe eines Flugzeugs sowie ein Verfahren zur Überprüfung des Klappen-Betätigungssystems bereitzustellen, mit dem die Sicherheit eines Klappen-Betätigungssystems auf effiziente Weise verbessert werden kann.

Diese Aufgabe wird mit den Merkmalen der unabhängigen Ansprüche gelöst. Weitere Ausführungsformen sind in den auf diese rückbezogenen Unteransprüchen angegeben.

Die Erfindung ist jedoch generell auf Stellklappen eines Flugzeugs anwendbar und auch auf Systeme, bei denen die Kraftübertragung an die Stellklappen hydraulisch oder elektrisch und vorzugsweise über einen zentralen Motor erfolgt. Die Forderung ist, dass kein Einzelfehler zum Ausfall eines Aktuators führen kann.

Generell kann bei dem erfindungsgemäßen System und dem erfindungsgemäßen Verfahren vorgesehen sein, dass die Stellklappen von einer System-Antriebsvorrichtung und einer System-Antriebsvorrichtung unabhängig voneinander angesteuert und betätigt werden können. In diesem Fall kann bei einem System mit jeweils zwei Stellklappen je Flügel vorgesehen sein, dass die von der System-Antriebsvorrichtung und der System-Antriebsvorrichtung unabhängig voneinander angesteuert und betätigt werden können, insbesondere die innere Landeklappe unabhängig von der äußeren bewegt, und die äußere unabhängig von der inneren Stellklappe bewegt werden kann.

Dabei kann die Betätigung der Klappen z.B. mit elektrisch angesteuerten Servo-Aktuatoren und daran gekoppelte Stellzylinder erfolgen, die über ein Hydrauliksystem angetrieben werden.

Erfindungsgemäß kann auch eine mechanische Antriebsübertragungs-Vorrichtung, insbesondere in Form einer Antriebswelle, zur Übertragung der Ausgangsleistung des Antriebsmotors auf Stell-Vorrichtungen und eine Kupplungsmechanik zwischen der Antriebsübertragungs-Vorrichtung und der Stellklappe, nachfolgend Klappen-Kupplungsvorrichtung genannt, vorgesehen sein. Dabei kann das System derart gestaltet sein, dass es zumindest eine Stellklappe aufweist, die mit dem erfindungsgemäßen Klappen-Betätigungssystem angesteuert werden kann, und es die Kompensation eines Fehlers in der Kupplungsmechanik zwischen der von dem zentralen Motor längs des Flügels verlaufenden Antriebswelle und der Stellklappe, nachfolgend Klappen-Kupplungsvorrichtung genannt, unabhängig, d.h. mechanisch entkoppelt von einer anderen Stellklappe vornehmen kann.

Die Stellklappen des erfindungsgemäßen Systems und Verfahrens können insbesondere Hochauftriebs-Klappen sein.

Die Erfindung stellt eine Lösung insbesondere für den Fall dar, in dem eine sekundäre Klappen-Verbindungsstrebe aufgrund von Systemanforderungen, wie z.B. die Einstellbarkeit unterschiedliche Anstellwinkel verschiedener Klappen eines Flügels, nicht vorgesehen ist.

Bei dem erfindungsgemäßen Verfahren zur Betätigung von zumindest einer Stellklappe an jeweils einem Flügel eines Flugzeugs geht es um die Bewertung der Funktionsfähigkeit und/oder zur Rekonfiguration und/oder zur Fehlerkompensation eines Systems zur Betätigung zumindest einer Stellklappe. Die Stellklappe wird von zumindest zwei Klappenkupplungs-Vorrichtungen mit jeweils einer Stellantriebs-Vorrichtung betätigt, wobei zumindest an einer Stellantriebs-Vorrichtung je Stellklappe eine Brems-Vorrichtung angeordnet ist, mit deren Betätigung ein Verstellzustand der jeweiligen Stellantriebs-Vorrichtung (30) im Betrieb arretiert werden kann. Zur Bewertung der Funktionsfähigkeit und/oder zur Rekonfiguration der Stellklappe sind erfindungsgemäß die Schritte vorgesehen:
- Betätigung jeder Brems-Vorrichtung einer Stellklappe einzeln,
- anschließend Betätigung der Stellantriebs-Vorrichtung mittels des Antriebsmotors,
- bei einer Veränderung des Verstellzustands der Stellklappe daraufhin um ein vorbestimmtes Maß Zuordnung des Zustands "defekt" den an der Stellklappe angekoppelten Klappenkupplungs-Vorrichtungen und/oder Beendigung der Betätigung der betroffenen Stellklappe.

Durch die Zuordnung des Zustands "defekt" wird eine Bewertung der Funktionsfähigkeit der Stellklappe einschließlich der dieser zugeordneten Klappenkupplungs-Vorrichtungen und Stellantriebs-Vorrichtung vorgenommen. Durch Beendigung der Betätigung der betroffenen Stellklappe wird auch eine Rekonfiguration der Stellklappe vorgenommen.

Das Verfahren ist insbesondere für ein erfindungsgemäßes System zur Betätigung von zumindest einer Stellklappe an jeweils einem Flügel eines Flugzeugs vorgesehen. Bei dem Verfahren kann zusätzlich vorgesehen sein:
- bei Nicht-Defekt-Zustand der Klappenkupplungs-Vorrichtungen einer Stellklappe Aktivieren jeder Brems-Vorrichtung,
- Vergleichen eines Soll-Kommandos für den Antriebsmotor und des mit dem Antriebszustand-Sensor gemessenen Verstellzustands und
- bei Überschreiten einer Differenz Beendigung der Betätigung der betroffenen Stellklappe.

Weiterhin können bei dem erfindungsgemäßen Verfahren die zusätzlichen Schritten vorgesehen sein:
- Durchführung eines Vergleichs zur Ermittlung einer Differenz zwischen dem an einer Brems-Vorrichtung kommandierten Soll-Bremsen-Betriebszustand und dem ermittelten Bremsen-Betriebszustand,
- bei dem Auftreten einer vorbestimmten Differenz an einer Brems-Vorrichtung Zuordnung den Klappenkupplungs-Vorrichtungen einer Stellklappe den Zustand "defekt" und/oder Beendigung der Betätigung der betroffenen Stellklappe.

Weiterhin ist nach der Erfindung ein System zur Betätigung von zumindest einer Stellklappe an jeweils einem Flügel eines Flugzeugs vorgesehen, das aufweist:
- zumindest zwei Klappenkupplungs-Vorrichtungen mit jeweils einer Stellantriebs-Vorrichtung, von denen jeweils eine an jeden von zwei in Spannweitenrichtung gesehen entfernt voneinander gelegenen Bereichen der Stellklappe gekoppelt sind,
- eine Brems-Vorrichtung zumindest an einer Stellantriebs-Vorrichtung je Stellklappe, mit deren Betätigung ein Verstellzustand der jeweiligen Stellantriebs-Vorrichtung arretiert werden kann,
- eine System-Antriebsvorrichtung mit einem Antriebsmotor, Antriebsübertragungs-Vorrichtungen, die den Antriebsmotor mit den Stellantriebs-Vorrichtungen kuppeln, um die Ausgangsleistung des Antriebsmotors auf die Stellantriebs-Vorrichtungen zu übertragen, und mit einem Antriebszustand-Sensor zum Ermitteln eines Verstellzustands des Antriebsmotors,
- einen Bremseneingriffs-Sensor, der an zumindest einer Brems-Vorrichtung einer Stellklappe zur Ermittlung des Bremsen-Eingriffszustands der Brems-Vorrichtung angeordnet ist,
- eine Ansteuervorrichtung mit einer Ansteuerfunktion zum Senden von Kommandosignalen an die System-Antriebsvorrichtung und zur Kommandierung von Soll-Bremseneingriffszuständen an die Brems-Vorrichtungen, mit einer Einrichtung zum Empfang von Signalen der Sensor-Vorrichtungen der Stellantriebs-Vorrichtungen und einer Rekonfigurationsfunktion.

Die Rekonfigurations-Funktion weist erfindungsgemäß eine Funktion auf, mit der jede Brems-Vorrichtung einer Stellklappe betätigt werden kann oder sämtliche einer Stellklappe zugeordnete Brems-Vorrichtungen einzeln betätigt werden können, anschließend die Stellantriebs-Vorrichtung mittels des Antriebsmotors betätigt und bei der Ermittlung einer Verstellzustands-Änderung mittels des Antriebszustand-Sensors um ein vorbestimmtes Maß den an der Stellklappe angekoppelten Klappenkupplungs-Vorrichtungen oder den Brems-Vorrichtungen den Zustand "defekt" zuordnet.

Bei dem System kann die Ansteuervorrichtung derart einstellt sein, dass die Stellklappe mit bereits einer Brems-Vorrichtung mit dem Zustand "defekt" nicht mehr angesteuert oder betätigt wird.

Die Antriebsübertragungs-Vorrichtungen können eine Ansteuerfunktion zur Ansteuerung jeder Stellantriebs-Vorrichtung aufweisen und eine elektrische oder hydraulische Kopplung des Antriebsmotors zur Übertragung der Antriebsleistung aufweisen.

Dabei können die Antriebsübertragungs-Vorrichtungen Antriebswellen zur mechanischen Kopplung des Antriebsmotors mit den Stellantriebs-Vorrichtungen aufweisen, so dass die Stellbewegung des Antriebsmotors mechanisch, z.B. über Antriebswellen, auf die angekoppelten Stellantriebs-Vorrichtungen übertragen wird. Die Rekonfigurations-Funktion weist weiterhin eine Funktion auf, mit der bei Nicht-Defekt-Zustand jede Brems-Vorrichtung aktiviert werden kann und ein Vergleich eines Soll-Kommandos des Antriebsmotors und des mit dem Antriebszustand-Sensor gemessenen Verstellzustands durchgeführt wird und bei Überschreiten einer Differenz die Ansteuerung der betroffenen Stellklappe beendet wird.

Weiterhin kann die Rekonfigurations-Funktion aufweisen: eine Vergleichsfunktion zur Ermittlung einer Differenz zwischen dem an einer Brems-Vorrichtung kommandierten Soll-Bremsen-Betriebszustand und dem ermittelten Bremsen-Betriebszustand und eine Fehleridentifikations-Funktion, mit der bei dem Auftreten einer vorbestimmten Differenz an einer Brems-Vorrichtung dieser der Zustand "defekt" zugeordnet wird. Dabei kann die Rekonfigurations-Funktion derart eingerichtet sein, dass bei dem Zuordnen des Zustands "defekt" an eine Brems-Vorrichtung die Ansteuerung dieser Brems-Vorrichtung beendet wird. Alternativ oder zusätzlich kann die Rekonfigurations-Funktion derart eingerichtet sein, dass bei dem Zuordnen des Zustands "defekt" an eine Brems-Vorrichtung, die Ansteuerung der Klappenkupplungs-Vorrichtung, an der die als defekt eingestufte Brems-Vorrichtung zugeordnet ist, beendet wird.

Bei den vorgenannten Varianten des erfindungsgemäßen Systems kann dieses derart gestaltet sein, dass die an einer Stellklappe angekoppelten Stellantriebe von dem Antriebsmotor angetrieben werden und einzeln von der Ansteuervorrichtung zur Betätigung der Stellklappe angesteuert werden können. Auch kann vorgesehen sein, dass die an einer Stellklappe angekoppelten Stellantriebe als Gruppe von dem Antriebsmotor angetrieben werden können, d.h. dass mehrere an einer Stellklappe angekoppelten Stellantriebe an dem Antriebsmotor angekoppelt sind.

Weiterhin kann das erfindungsgemäße System derart gestaltet sein, dass die Stellantriebs-Vorrichtungen von einem zentralen Antriebsmotor angetrieben werden, wobei die Antriebsübertragungs-Vorrichtungen Antriebswellen sind.

Der Bremseneingriffs-Sensor kann in die Brems-Vorrichtung integriert sein. Insbesondere kann der Bremseneingriffs-Sensor ein Näherungssensor zur Erfassung des Abstandes von zwei Bremsmitteln, z.B. zwei gegeneinander wirkende Bremsscheiben sind, wobei ein Bremsmittel klappenfest und ein andere Bremsmittel hauptflügelfest angebracht ist.

Der Bremseneingriffs-Sensor kann realisiert sein durch einen Sensor zur Erfassung einer Stellbewegung und einem mit diesem funktional gekoppelten Bremsbetätigungsmodell zur Ermittlung des momentanen Bremseingriffszustands der Bremsvorrichtung.

Bei den Ausführungsformen des erfindungsgemäßen Systems kann eine oder können mehrere Stellantriebs-Vorrichtungen zwei Lastpfade oder Kraftübertragungsmechanismen zur Kopplung der Antriebswelle mit der Stellklappe aufweisen.

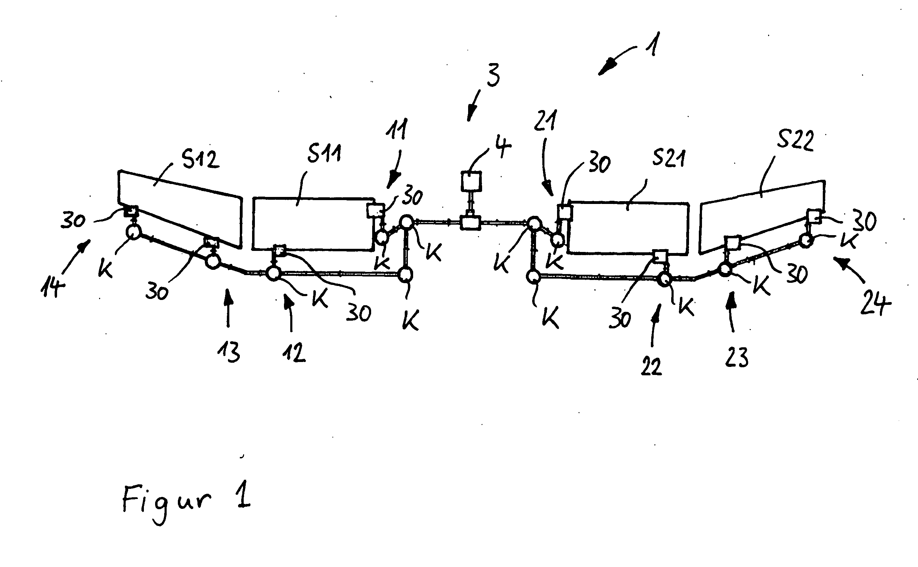

Im Folgenden werden bevorzugte Ausführungsbeispiele der Erfindung anhand der Figur 1 beschrieben, die zeigt:
- eine schematische Systemdarstellung einer Ausführungsform eines Hochauftriebssystems nach der Erfindung als Beispiel für das erfindungsgemäße Klappen-Betätigungssystem.

Die Figur 1 zeigt als Ausführungsbeispiel der Erfindung ein Hochauftriebssystem 1 zur Betätigung von zwei Hochauftriebsklappen an jeweils einem von zwei Hauptflügeln eines Flugzeugs (nicht dargestellt) mittels einer System-Antriebsvorrichtung 3 mit einem Antriebsmotor 4 und einer Ansteuervorrichtung zur Betätigung der System-Antriebsvorrichtung. Nach der Erfindung kann im allgemeinen Fall auch nur eine Stellklappen je Flügel, die von dem zentralen Antrieb 3 angesteuert werden, vorgesehen sein. Im gegebenen Fall werden je Flügel zwei Stellklappen S11, S12, S21, S22 von einem Zentralantrieb 3 angetrieben. Die Ansteuervorrichtung kann auch Teil der System-Antriebsvorrichtung sein. Nach der Darstellung werden also insgesamt vier Hochauftriebsklappen S11, S12, S21, S22 als Beispiel für Stellklappen mit dem erfindungsgemäßen Betätigungssystem angesteuert.

An jeder Stellklappe S11, S12, S21, S22 sind zumindest zwei Klappenkupplungs-Vorrichtungen 11, 12, 13, 14 mit jeweils einer Stellantriebs-Vorrichtung 30 gekoppelt. Bei der Anordnung von zwei Klappenkupplungs-Vorrichtungen 11, 12, 13, 14 je Stellklappe ist jeweils eine auf jeweils einen von zwei in Spannweitenrichtung gesehen entfernt voneinander gelegenen Bereichen der Stellklappe S11, S12, S21, S22 an diese gekoppelt. Die Antriebsübertragungs-Vorrichtungen zur Übertragung der Ausgangsleistung des Antriebsmotors 4 an die Klappenkupplungs-Vorrichtungen 11, 12, 13, 14 sind als Antriebswellen A1, A2 ausgebildet. Die Antriebswellen A1, A2 sind aus mehreren Teilen zusammengesetzt, die mit Kopplungsvorrichtungen K oder Getriebevorrichtungen miteinander gekoppelt sind, z.B. um längeren Übertragungsstrecken zu entsprechend oder um Richtungsänderungen entlang des Flügels zu bewerkstelligen oder um die Antriebswelle mit der jeweiligen Klappenkupplungs-Vorrichtung 11, 12, 13, 14 zu koppeln.

Das dargestellte Betätigungssystem 1 weist einen Systemantrieb 3 in Form z.B. eines Hydraulikmotors auf, der eine zu jedem Flügel verlaufende Antriebswelle A1, A2 antreibt. Jede Antriebswelle A1, A2 verbindet den Systemantrieb 3 mit Klappen-Kupplungsvorrichtungen, die die Drehbewegung der Antriebswelle in eine Stellbewegung zur Verstellung der Klappe umsetzen. In der in der Figur 1 dargestellten Ausführungsform sind auf der ersten Seite zwei Klappen-Kupplungsvorrichtungen 11, 12 zur Betätigung der ersten Klappe S11 und weitere zwei Klappen-Kupplungsvorrichtungen 13, 14 zur Betätigung der zweiten Klappe S12 zwischen der ersten Antriebswelle A1 und den Klappen S11 bzw. S12 vorgesehen. Weiterhin sind auf der zweiten Seite zwei Klappen-Kupplungsvorrichtungen 21, 22 zur Betätigung der ersten Klappe S21 und weitere zwei Klappen-Kupplungsvorrichtungen 23, 24 zur Betätigung der zweiten Klappe S22 zwischen der zweiten Antriebswelle A2 und den Klappen S21 bzw. S22 vorgesehen. Die Klappen-Kupplungsvorrichtung überträgt die Drehbewegung der jeweiligen Antriebswelle A1, A2 auf eine entsprechende Verstellbewegung der Klappe.

Nach der Erfindung ist zumindest eine Stellklappe S11, S12 oder S21, S22 je Flügel vorgesehen, im gezeigten Ausführungsbeispiel werden zwei Stellklappen je Flügel werden von jeweils zwei Klappen-Kupplungsvorrichtungen angetrieben. Hierzu weist jede Klappen-Kupplungsvorrichtung eine Stellantriebs-Vorrichtung 30 auf. Die Antriebswelle A1, A2 kann direkt mit der Stellantrieb-Vorrichtung oder über eine Kopplungsmechanik (nicht dargestellt) mit der Stellantrieb-Vorrichtung 30 verbunden sein. Weiterhin kann die Stellantriebs-Vorrichtung 30 über eine Stellmechanik 33 an die Klappe S11, S12, S21, S22 angekoppelt sein.

Weiterhin weist zumindest eine der an eine Stellklappe S11, S12, S21, S22 gekoppelte Klappen-Kupplungsvorrichtung 11, 12, 13, 14 eine Brems-Vorrichtung (nicht dargestellt) auf, mit deren Betätigung ein Verstellzustand der jeweiligen Stellklappe arretiert wird. Insbesondere kann somit jede Klappen-Kupplungsvorrichtung 11, 12, 13, 14 eine derartige Brems-Vorrichtung aufweisen.

Das erfindungsgemäße System zur Betätigung von zumindest einer Stellklappe an jeweils einem Flügel eines Flugzeugs, weist also auf:
- zumindest zwei Klappenkupplungs-Vorrichtungen 11, 12, 13, 14; 21, 22, 23, 24 mit jeweils einer Stellantriebs-Vorrichtung 30, von denen jeweils eine auf jeweils einen von zwei in Spannweitenrichtung gesehen entfernt voneinander gelegenen Bereichen der Stellklappe S11, S12, S21, S22 an diese gekoppelt sind,
- eine Brems-Vorrichtung zumindest an einer Stellantriebs-Vorrichtung 30 je Stellklappe, mit deren Betätigung ein Verstellzustand der jeweiligen Stellantriebs-Vorrichtung 30 arretiert werden kann,
- eine System-Antriebsvorrichtung 3 mit einem Antriebsmotor 4, Antriebsübertragungs-Vorrichtungen A1, A2, die den Antriebsmotor 4 mit den Stellantriebs-Vorrichtungen 30 kuppeln, um die Ausgangsleistung des Antriebsmotors 4 auf die Stellantriebs-Vorrichtungen 30 zu übertragen, und mit einem Antriebszustand-Sensor zum Ermitteln eines Verstellzustands des Antriebsmotors 4,
- einen Bremseneingriffs-Sensor, der an zumindest einer Brems-Vorrichtung einer Stellklappe zur Ermittlung des Bremsen-Eingriffszustands der Brems-Vorrichtung angeordnet ist,
- eine Ansteuervorrichtung mit einer Ansteuerfunktion zum Senden von Kommandosignalen an die System-Antriebsvorrichtung 3 und zur Kommandierung von Soll-Bremseneingriffszuständen an die Brems-Vorrichtungen, mit einer Einrichtung zum Empfang von Signalen der Sensor-Vorrichtungen der Stellantriebs-Vorrichtungen.

Die Ansteuervorrichtung weist weiterhin eine Rekonfigurationsfunktion auf.

Das erfindungsgemäße System weist auch eine Ansteuervorrichtung zur Kommandierung der Soll-Verstellzustände der Stellklappen auf, die aufweist: eine Ansteuerfunktion zum Senden von Kommandosignalen an die System-Antriebsvorrichtung 3 und zur Kommandierung von Soll-Bremseneingriffszuständen an die Brems-Vorrichtungen, eine Einrichtung zum Empfang von Signalen der Sensor-Vorrichtungen der Stellantriebs-Vorrichtungen und die Rekonfigurationsfunktion.

Die Stellantriebs-Vorrichtung 30 kann als Einfach-Lastpfad-Stellantrieb oder als Doppel-Lastpfad-Stellantrieb ("Double Load Path Flap Aktuator) ausgebildet sein.

Der Doppel-Lastpfad-Stellantrieb kann insbesondere derart ausgebildet sein, dass ein erster Lastpfad als eine Kraftübertragungsmechanik realisiert ist, die bei einer Betätigung der Antriebsübertragungs-Vorrichtungen A1, A2 die Bewegung derselben auf die Stellklappe überträgt, wobei die Kraftübertragungsmechanik z.B. als Getriebe ausgebildet sein kann. Weiterhin kann ein zweiter Lastpfad als mechanische Rückkopplung von der Stellklappe zu der jeweiligen Antriebsübertragungs-Vorrichtung A1, A2 ausgeführt sein, so dass bei einem Versagen des ersten Lastpfads noch eine mechanische Koppelung zwischen der Stellklappe und der jeweiligen Antriebsübertragungs-Vorrichtung A1, A2 vorhanden ist und die Stellklappe am Hauptflügel mechanisch gekoppelt bleibt. Der Ausfall eines Aktuators kann dann durch die Feststellung einer Verstellzustandsänderung um ein vorbestimmtes Maß oder über ein vorbestimmtes Maß hinaus mittels des Antriebszustand-Sensors und mittels der Rekonfigurations-Funktion ermittelt werden. Die Feststellung einer Verstellzustandsänderung kann insbesondere auch für die Ermittlung von asymmetrischen, d.h. über einen vorbestimmten Wert hinausgehenden unterschiedlichen Verstellzustands-Änderungen bei den Antriebsübertragungs-Vorrichtungen unterschiedlicher Flügel verwendet werden. Alternativ kann auch vorgesehen sein, dass ein solcher Defekt auch durch eine in diesem Bereich an der Stellklappe oder der Antriebsübertragungs-Vorrichtung angeordneten Sensor-Vorrichtung ermittelbar ist.

Der Doppel-Lastpfad-Stellantrieb kann als Getriebe mit doppeltem Lastpfad insbesondere in Form einer Kugelumlaufspindel ausgeführt sein. Hinsichtlich des Einbauraums des Doppel-Lastpfad-Stellantriebs kann es vorteilhaft sein, diesen als rotatorisches Getriebe mit doppeltem Lastpfad auszuführen. Das rotatorische Getriebe mit doppeltem Lastpfad kann insbesondere aus zwei identischen Getrieben gebildet sein, wobei ein Getriebe als Sekundärgetriebe vorgesehen ist, das der Bewegung des anderen Getriebes als Primärgetriebe folgt. Wichtig hierbei ist, dass das Sekundärgetriebe im normalen Betrieb keine Last aufnimmt. Dies kann verwirklicht werden, indem man dem Sekundärgetriebe ein definiertes Maß an Spiel gibt. Auch andere Ausführungsformen des Doppel-Lastpfad-Stellantriebs können für die Stellantriebs-Vorrichtung verwendet werden.

Bei der Verwendung des Doppel-Lastpfad-Stellantriebs in dem erfindungsgemäßen System kann dieses insbesondere derart gestaltet sein, dass die Rekonfigurations-Funktion die Brems-Vorrichtung betätigt und die Stellklappe in ihrer momentanen Stellposition arretiert, wenn ein Defekt in der betreffenden Klappenkupplungs-Vorrichtung oder der betreffenden Stellantriebs-Vorrichtung ermittelt wird.

Bei der Ausführung der Stellantriebs-Vorrichtung als Stellantriebs-Vorrichtung mit einem Einfach-Lastpfad-Stellantrieb oder als Stellantriebs-Vorrichtung mit einem Doppel-Lastpfad-Stellantrieb kann die Stellantriebs-Vorrichtung mit einer der Brems-Vorrichtung zugeordneten Drehmomenten-Sperrvorrichtung versehen sein, mit der festgestellt wird, wenn kein Drehmoment am Eingang des Getriebes ansteht. Die Ansteuervorrichtung kann mit der Drehmomenten-Sperrvorrichtung funktional derart verbunden sein, dass bei einem Nicht-Anliegen eines Drehmoments insbesondere bei der Verstellung einer Antriebsübertragungs-Vorrichtung die Brems-Vorrichtung aktiviert wird, so dass eine Drehmomenten-Sperrfunktion oder eine 'No-back'-Funktion aktiviert wird. Diese Drehmomenten-Sperrfunktion ist dabei als eine Brems-Vorrichtung ausgeführt, die das Getriebe oder die Stellantriebs-Vorrichtung in Position hält. Diese Drehmomenten-Sperrfunktion ist vorzugsweise derart ausgebildet, dass diese in beiden Drehrichtungen sperren kann. Alternativ oder zusätzlich kann das Getriebe eine Drehmomentbegrenzungs-Funktion aufweisen, die derart vorgesehen ist, dass bei einem Überschreiten eines vorbestimmten oder eingestellten Drehmoments die Bremse betätigt wird.

Alternativ kann die Stellantriebs-Vorrichtung 30 so gestaltet sein, dass beide der Aktuatoren aktiv die Stellbewegung der Antriebswelle auf die Stellklappe übertragen, so dass bei einem Defekt oder Ausfall eines der Aktuatoren der andere Aktuator die Betätigungsfunktion der Stellantriebs-Vorrichtung 30 für die jeweilige Stellklappe allein übernehmen kann. Ein Defekt in einem der parallel in einer Stellantriebs-Vorichtung aktiv wirkenden Aktuatoren kann z.B. ebenfalls durch die Ermittlung der genannten asymmetrischen Verstellzustandsänderungen erfolgen oder alternativ oder zusätzlich durch eine in diesem Bereich an der Stellklappe oder der Antriebsübertragungs-Vorrichtung angeordneten Sensor-Vorrichtung.

Die Ansteuervorrichtung kann derart eingestellt sein, dass bei dem Auftreten der genannten Abweichungen von Sensorwerten den an der Stellklappe angekoppelten Klappenkupplungs-Vorrichtungen 11, 12, 13, 14 oder den Brems-Vorrichtungen der Zustand "defekt" zugeordnet wird. Zusätzlich oder alternativ kann vorgesehen sein, dass die betreffende Stellklappe nicht mehr betätigt wird.

Die erfindungsgemäße Rekonfigurations-Funktion weist eine Funktion auf, mit der jede Brems-Vorrichtung einer Stellklappe einzeln betätigt werden kann, anschließend die Stellantriebs-Vorrichtung mittels des Antriebsmotors betätigt und bei der Ermittlung einer Verstellzustandsänderung mittels des Antriebszustand-Sensors um ein vorbestimmtes Maß den an der Stellklappe angekoppelten Klappenkupplungs-Vorrichtungen 11, 12, 13, 14 oder den Brems-Vorrichtungen den Zustand "defekt" zuordnet oder die Brems-Vorrichtung vom System als defekt behandelt. Auf diese Weise erfolgt mit diesem Verfahrensschritt bzw. dieser Funktion ein Leistungstest der betreffenden Brems-Vorrichtung. Es wird also aktiv eine Brems-Vorrichtung oder mehrere oder sämtliche Brems-Vorrichtungen, die an eine Stellklappe angekoppelt sind, betätigt und dann der Antriebsmotor 4 gefahren. Wenn dabei über eine Sensor-Vorrichtung eine Verstellzustandsänderung über einen vorbestimmten Sollwert hinaus mittels der Rekonfigurations-Funktion festgestellt wird, bedeutet dies, dass die Brems-Vorrichtung z.B. aufgrund Verschleiß, nicht ausreichend leistungsfähig ist und die dieser zugewiesene Sicherheitsfunktion eines Festhaltens der Stellklappe nicht mehr übernehmen kann. Die Sensor-Vorrichtung kann dabei die Sensor-Vorrichtung an der System-Antriebsvorrichtung, also der Antriebszustand-Sensor, oder eine Sensor-Vorrichtung an einem davon entfernt gelegenen Bereich der Antriebsübertragungs-Vorrichtung sein. Vorzugsweise wird eine Brems-Vorrichtung einzeln auf die beschriebene Weise getestet.

Durch das Vorsehen dieses Tests kann die Integrität des Systems mit relativ geringem mechanischem Aufwand deutlich erhöht werden. Weiterhin kann mit der erfindungsgemäßen Maßnahme die Struktur leichter ausgelegt werden, da das System derart ausgelegt werden kann, dass bei einem Vorsehen des Leistungstests zur Erreichung einer geforderte Integrität der Fehlerfall nicht betrachtet werden muss, bei dem die Brems-Vorrichtung ausfällt.

Erfindungsgemäß kann weiterhin eine Funktionsprüfung der Stellantriebs-Vorrichtung vorgesehen sein. Hierzu kann die Rekonfigurations-Funktion weiterhin eine Vergleichsfunktion zur Ermittlung einer Differenz zwischen dem an einer Brems-Vorrichtung kommandierten Soll-Bremsen-Betriebszustand und dem ermittelten Bremsen-Betriebszustand und eine Fehleridentifikations-Funktion aufweisen, mit der bei dem Auftreten einer vorbestimmten Differenz an einer Brems-Vorrichtung dieser der Zustand "defekt" zugeordnet wird. Dieser Funktionstest kann erfindungsgemäß häufiger durchgeführt werden. Z.B. kann das erfindungsgemäße System dazu eingerichtet sein, dass dieser Funktionstest vor jedem Flug durchgeführt wird.

Der Bremsen-Betriebszustand kann nach der Erfindung mittels eines Bremseneingriffs-Sensors, der z.B. in die Brems-Vorrichtung integriert ist, ermittelt werden. Insbesondere kann der Bremseneingriffs-Sensor ein Näherungssensor zur Erfassung des Abstandes von zwei Bremsmitteln, z.B. zwei gegeneinander wirkende Bremsscheiben sind, sein, wobei ein Bremsmittel klappenfest und ein andere Bremsmittel hauptflügelfest angebracht ist. Der Bremseneingriffs-Sensor kann alternativ oder zusätzlich realisiert sein durch einen Sensor zur Erfassung einer Stellbewegung und einem mit diesem funktional gekoppelten Bremsbetätigungsmodell zur Ermittlung des momentanen Bremseingriffszustands der Bremsvorrichtung.

Die Ansteuervorrichtung weist eine Einrichtung zum Senden von Kommandosignalen an die Stellantriebs-Vorrichtungen zur Betätigung der Stellantriebs-Vorrichtungen und die jeweils zugeordnete Brems-Vorrichtung zur Betätigung der Brems-Vorrichtung auf. Durch die Betätigung der Stellantriebs-Vorrichtungen wird der Verstell-Zustand der Stell-Klappe, an die die Stellantriebs-Vorrichtung angekoppelt ist, verändert, also die Stellklappe ein- oder ausgefahren. Um die Stellklappe bestimmungsgemäß ein- oder auszufahren, sind beide oder sämtliche an der jeweiligen Stellklappe angekoppelten Stellantriebs-Vorrichtungen von der Ansteuervorrichtung gleichzeitig derart zu betätigen, dass die Stellantriebs-Vorrichtungen die Stellklappe in der bestimmungsgemäßen Orientierung gegenüber dem Hauptflügel bewegen.

Insbesondere bei dem Vorsehen von Antriebsübertragungs-Vorrichtungen A1, A2 in Form von Antriebswellen zur mechanischen Kopplung des Antriebsmotors mit den Stellantriebs-Vorrichtungen kann die Rekonfigurations-Funktion weiterhin eine Funktion aufweisen, mit der bei Nicht-Defekt-Zustand jede Brems-Vorrichtung aktiviert werden kann und ein Vergleich eines Soll-Kommandos des Antriebsmotors 4 und des mit dem Antriebszustand-Sensor gemessenen Verstellzustands durchgeführt wird und bei Überschreiten einer Differenz die Ansteuerung der betroffenen Stellklappe beendet wird.

Das erfindungsgemäße System mit der Ansteuervorrichtung kann Stellantriebs-Vorrichtungen mit einfachem Lastpfad oder mit doppeltem Lastpfad aufweisen. Auch kann das System eine an einer Stellklappe oder innerhalb des Systems verwendete Kombination von Stellantriebs-Vorrichtungen mit einfachem und doppeltem Lastpfad aufweisen. Nach der Erfindung erfolgt somit ein aktives Testen des Systems derart, dass bei dem Vorsehen einer Stellantriebs-Vorrichtung mit doppeltem Lastpfad die Verfügbarkeit des zweiten Lastpfades überprüft werden kann.

Erfindungsgemäß kann auf Sensor-Vorrichtungen und insbesondere Positionssensoren an der Klappe zur Fehlererkennung verzichtet werden, um dennoch eine übliche Integritätsforderung zu erfüllen. Auch ein Element wie die "Interconnection Strut" wird nicht mehr benötigt. Ebenso können die "Wing Tip Brakes" entfallen. Auch können relativ komplexe Überwachungsalgorithmen entfallen, da die Rekonfigurations-Funktion nach der Erfindung relativ einfach gestaltet ist. Jedoch ist an zumindest einer Stellantriebs-Vorrichtung einer Stellklappe ein Bremseneingriffs-Sensor vorzusehen.

Zur Erhöhung der Integrität des erfindungsgemäßen Systems kann dieses Sensor-Vorrichtungen aufweisen, von denen jeweils eine an den in Spannweitenrichtung gegenüber dem Flugzeugrumpf entfernt voneinander gelegenen Bereichen der Stellklappe und/oder der Antriebsübertragungs-Vorrichtungen zur Ermittlung eines Verstellzustands angeordnet ist. Dabei kann der Verstellzustand insbesondere eine Verstellzustandsänderung der Stellklappe oder der Antriebsübertragungs-Kupplungen oder der Antriebsübertragungs-Vorrichtungen sein. Auch können weitere Sensor-Vorrichtungen zur Erfassung der Position einer oder mehrerer Stellklappen vorgesehen sein und mit der Ansteuervorrichtung funktional gekoppelt sein. Dabei kann diese Sensor-Information zur Ermittlung einer Verstellzustandsänderung der Stellklappe oder der Antriebsübertragungs-Kupplungen oder der Antriebsübertragungs-Vorrichtungen anstelle oder zusätzlich zu den von dem Antriebszustand-Sensor der System-Antriebsvorrichtung 3 ermittelten Informationen verwendet werden. Dies kann insbesondere dann vorgesehen sein, wenn die Antriebsübertragungs-Vorrichtungen A1, A2 Antriebswellen zur mechanischen Kopplung des Antriebsmotors mit den Stellantriebs-Vorrichtungen aufweisen. Bei der Verwendung von Sensor-Vorrichtungen an den in Spannweitenrichtung gegenüber dem Flugzeugrumpf entfernt voneinander gelegenen Bereichen der Stellklappe und/oder der Antriebsübertragungs-Vorrichtungen anstelle des Antriebszustand-Sensors erfolgt die Zuordnung des Zustands "defekt" an die jeweiligen Klappenkupplungs-Vorrichtungen 11, 12, 13, 14 oder den Brems-Vorrichtungen mittels der mit diesen Sensor-Vorrichtungen ermittelten Verstellzustands-Änderungen.

### Bezugszeichenliste

- 1: System
- 3: System-Antriebsvorrichtung
- 4: Antriebsmotor
- 11: Klappenkupplungs-Vorrichtung
- 12: Klappenkupplungs-Vorrichtung
- 13: Klappenkupplungs-Vorrichtung
- 14: Klappenkupplungs-Vorrichtung
- 21: Klappenkupplungs-Vorrichtung
- 22: Klappenkupplungs-Vorrichtung
- 23: Klappenkupplungs-Vorrichtung
- 24: Klappenkupplungs-Vorrichtung
- 30: Stellantriebs-Vorrichtung
- A1: erste Antriebsübertragungs-Vorrichtung oder erste Antriebswelle
- A2: zweite Antriebsübertragungs-Vorrichtung oder zweite Antriebswelle
- S11: innere Stellklappe des ersten Flügels
- S12: äußere Stellklappe des ersten Flügels
- S21: innere Stellklappe des zweiten Flügels
- S22: äußere Stellklappe des zweiten Flügels
- K: Kopplungsvorrichtung

## Patentansprüche

1. Verfahren zur Betätigung von zumindest einer Stellklappe an jeweils einem Flügel eines Flugzeugs, die von zumindest zwei Klappenkupplungs-Vorrichtungen (11, 12, 13, 14) mit jeweils einer Stellantriebs-Vorrichtung (30) betätigt wird, wobei zumindest an einer Stellantriebs-Vorrichtung (30) je Stellklappe eine Brems-Vorrichtung angeordnet ist, mit deren Betätigung ein Verstellzustand der jeweiligen Stellantriebs-Vorrichtung (30) arretiert werden kann, **gekennzeichnet durch** die Schritte:
• Betätigung jeder Brems-Vorrichtung einer Stellklappe einzeln,
• anschließend Betätigung der Stellantriebs-Vorrichtung mittels des Antriebsmotors,
• bei einer Veränderung des Verstellzustands der Stellklappe um ein vorbestimmtes Maß Beendigung der Betätigung der Stellantriebs-Vorrichtung der betroffenen Stellklappe.

2. Verfahren nach dem Anspruch 1, **gekennzeichnet durch** die zusätzlichen Schritte:
• bei Nicht-Defekt-Zustand der Klappenkupplungs-Vorrichtungen einer Stellklappe Aktivieren jeder Brems-Vorrichtung,
• Vergleichen eines Soll-Kommandos für den Antriebsmotor (4) und des mit dem Antriebszustand-Sensor gemessenen Verstellzustands und
• bei Überschreiten einer Differenz Beendigung der Betätigung der betroffenen Stellklappe.

3. Verfahren nach dem Anspruch 1 oder 2, **gekennzeichnet durch** die zusätzlichen Schritte:
• Durchführung eines Vergleichs zur Ermittlung einer Differenz zwischen dem an einer Brems-Vorrichtung kommandierten Soll-Bremsen-Betriebszustand und dem ermittelten Bremsen-Betriebszustand,
• bei dem Auftreten einer vorbestimmten Differenz an einer Brems-Vorrichtung Beendigung der Betätigung der betroffenen Stellklappe.

4. System zur Betätigung von zumindest einer Stellklappe an jeweils einem Flügel eines Flugzeugs, das aufweist:
• zumindest zwei Klappenkupplungs-Vorrichtungen (11, 12, 13, 14) mit jeweils einer Stellantriebs-Vorrichtung (30), von denen jeweils eine an jedem von zwei in Spannweitenrichtung gesehen entfernt voneinander gelegenen Bereichen der Stellklappe (S11, S12, S21, S22) an diese gekoppelt sind,
• eine Brems-Vorrichtung zumindest an einer Stellantriebs-Vorrichtung (30) je Stellklappe, mit deren Betätigung ein Verstellzustand der jeweiligen Stellantriebs-Vorrichtung (30) arretiert werden kann,
• eine System-Antriebsvorrichtung (3) mit einem Antriebsmotor (4), Antriebsübertragungs-Vorrichtungen (A1, A2), die den Antriebsmotor (4) mit den Stellantriebs-Vorrichtungen (30) kuppeln, um die Ausgangsleistung des Antriebsmotors (4) auf die Stellantriebs-Vorrichtungen (30) zu übertragen, und mit einem Antriebszustand-Sensor zum Ermitteln eines Verstellzustands des Antriebsmotors (4),
• einen Bremseneingriffs-Sensor, der an zumindest einer Brems-Vorrichtung einer Stellklappe zur Ermittlung des Bremsen-Eingriffszustands der Brems-Vorrichtung angeordnet ist,
• eine Ansteuervorrichtung mit einer Ansteuerfunktion zum Senden von Kommandosignalen an die System-Antriebsvorrichtung (3) und zur Kommandierung von Soll-Bremseneingriffszuständen an die Brems-Vorrichtungen, mit einer Einrichtung zum Empfang von Signalen der Sensor-Vorrichtungen der Stellantriebs-Vorrichtungen und einer Rekonfigurationsfunktion,
**dadurch gekennzeichnet, dass**
die Rekonfigurations-Funktion eine Funktion aufweist, mit der jede Brems-Vorrichtung einer Stellklappe einzeln betätigt werden kann, anschließend die Stellantriebs-Vorrichtung mittels des Antriebsmotors betätigt und bei der Ermittlung einer Verstellzustandsänderung mittels des Antriebszustand-Sensors um ein vorbestimmtes Maß den an der Stellklappe angekoppelten Klappenkupplungs-Vorrichtungen (11, 12, 13, 14) oder den Brems-Vorrichtungen den Zustand "defekt" zuordnet.

5. System nach dem Anspruch 4, **dadurch gekennzeichnet, dass** die Ansteuervorrichtung derart eingestellt ist, dass diese die betreffende Stellklappe nicht mehr betätigt.

6. System nach dem Anspruch 4 oder 5, **dadurch gekennzeichnet, dass** die Antriebsübertragungs-Vorrichtungen (A1, A2) eine Ansteuerfunktion zur Ansteuerung jeder Stellantriebs-Vorrichtung aufweist und eine elektrische oder hydraulische Kopplung des Antriebsmotors zur Übertragung der Antriebsleistung aufweist.

7. System nach einem der voranstehenden Ansprüche 4 bis 6, **dadurch gekennzeichnet, dass** die Antriebsübertragungs-Vorrichtungen (A1, A2) Antriebswellen zur mechanischen Kopplung des Antriebsmotors mit den Stellantriebs-Vorrichtungen aufweisen und die Rekonfigurations-Funktion weiterhin eine Funktion aufweist, mit der bei Nicht-Defekt-Zustand jede Brems-Vorrichtung aktiviert werden kann und ein Vergleich eines Soll-Kommandos des Antriebsmotors (4) und des mit dem Antriebszustand-Sensor gemessenen Verstellzustands durchgeführt wird und bei Überschreiten einer Differenz die Ansteuerung der betroffenen Stellklappe beendet wird.

8. System nach einem der voranstehenden Ansprüche 4 bis 7, **dadurch gekennzeichnet, dass** die Rekonfigurations-Funktion weiterhin eine Vergleichsfunktion zur Ermittlung einer Differenz zwischen dem an einer Brems-Vorrichtung kommandierten Soll-Bremsen-Betriebszustand und dem ermittelten Bremsen-Betriebszustand und eine Fehleridentifikations-Funktion aufweist, mit der bei dem Auftreten einer vorbestimmten Differenz an einer Brems-Vorrichtung dieser der Zustand "defekt" zugeordnet wird.

9. System nach dem Anspruch 8, **dadurch gekennzeichnet, dass** bei dem Zuordnen des Zustands "defekt" an eine Brems-Vorrichtung, die Ansteuerung dieser Brems-Vorrichtung beendet wird.

10. System nach dem Anspruch 8 oder 9, **dadurch gekennzeichnet, dass** bei dem Zuordnen des Zustands "defekt" an eine Brems-Vorrichtung, die Ansteuerung der Klappenkupplungs-Vorrichtung, an der die als defekt eingestufte Brems-Vorrichtung zugeordnet ist, beendet wird.

11. System nach einem der voranstehenden Ansprüche 4 bis 10, **dadurch gekennzeichnet, dass** die an einer Stellklappe angekoppelten Stellantriebe von dem Antriebsmotor angetrieben und einzeln von der Ansteuervorrichtung zur Betätigung der Stellklappe angesteuert werden können.

12. System nach einem der voranstehenden Ansprüche 4 bis 10, **dadurch gekennzeichnet, dass** die an einer Stellklappe angekoppelten Stellantriebe als Gruppe von dem Antriebsmotor angetrieben werden können.

13. System nach einem der voranstehenden Ansprüche 4 bis 12, **dadurch gekennzeichnet, dass** die Stellantriebs-Vorrichtungen (30) von einem zentralen Antriebsmotor (3) angetrieben wird, wobei die Antriebsübertragungs-Vorrichtungen Antriebswellen (A1, A2) sind.

14. System nach dem Anspruch 4 oder 13, **dadurch gekennzeichnet, dass** der Bremseneingriffs-Sensor in die Brems-Vorrichtung integriert ist.

15. System nach dem Anspruch 4 oder 14, **dadurch gekennzeichnet, dass** der Bremseneingriffs-Sensor ein Näherungssensor zur Erfassung des Abstandes von zwei Bremsmitteln ist.

16. System nach dem Anspruch 4 oder 15, **dadurch gekennzeichnet, dass** der Bremseneingriffs-Sensor einen Sensor zur Erfassung einer Stellbewegung und eine mit diesem funktional gekoppelten Bremsbetätigungsmodell zur Ermittlung des momentanen Bremseingriffszustands der Bremsvorrichtung aufweist.

17. System nach dem Anspruch 4 oder 16, **dadurch gekennzeichnet, dass** die Stellantriebs-Vorrichtung zwei Lastpade zur Kopplung der Antriebswelle (A1, A2) mit der Stellklappe aufweist.

## Claims

1. A method for actuating at least one positioning flap on each wing of an aircraft, which positioning flap is actuated by at least two flap coupling devices (11, 12, 13, 14) each comprising an actuator device (30), wherein at least on one actuator device (30) for each positioning flap a brake mechanism is arranged by means of whose actuation an adjustment state of the respective actuator device (30) can be locked, **characterized by** the steps:
• actuating each brake mechanism of a positioning flap individually,
• subsequently actuating the actuator device by means of the drive motor,
• in the case of a change in the adjustment state of the positioning flap by a predetermined extent, terminating actuation of the actuator device of the positioning flap concerned.

2. The method according to claim 1, **characterized by** the following additional steps:
• in the case of a non-defective state of the flap coupling devices of a positioning flap, activating each brake mechanism,
• comparing a target command for the drive motor (4) with the adjustment state measured by means of the drive state sensor, and
• in the case of a differential being exceeded, terminating actuation of the positioning flap concerned.

3. The method according to claim 1 or 2, **characterized by** the following additional steps:
• carrying out a comparison for determining the difference between the desired brake operation state commanded at a brake mechanism and the determined brake operation state,
• in the case of a predetermined differential occurring on a brake mechanism, terminating actuation of the positioning flap concerned.

4. A system for actuating at least one positioning flap on each wing of an aircraft, with the system comprising:
• at least two flap coupling devices (11, 12, 13, 14), each comprising a actuator device (30), with each of said flap coupling devices being coupled to the positioning flap (S11, S12, S21, S22) in regions that are spaced apart from each other when viewed in the wingspan direction,
• a brake mechanism on at least one actuator device (30) for each positioning flap, by means of actuation of which brake mechanism an adjustment state of the respective actuator device (30) can be locked,
• a system drive device (3) with a drive motor (4), drive transmission devices (A1, A2) that couple the drive motor (4) to the actuator devices (30) in order to transmit the output of the drive motor (4) to the actuator devices (30), and with a drive state sensor for determining an adjustment state of the drive motor (4),
• a brake intervention sensor that is arranged on at least one brake mechanism of a positioning flap for determining the intervention state of the brake mechanism,
• a control device with a control function for transmitting command signals to the system drive device (3) and for commanding desired brake intervention states to the brake mechanisms, with a device for receiving signals of the sensor devices of the flap actuator devices and with a reconfiguration function,
**characterized in that**
the reconfiguration function comprises a function by means of which each brake mechanism of a positioning flap can be actuated individually; subsequently the flap actuator device is actuated by means of the drive motor, and if a change in the adjustment state by a predetermined extent has been detected by means of the drive state sensor allocates the "defective" state to flap coupling devices (11, 12, 13, 14) coupled to the positioning flap, or to the brake mechanisms.

5. The system according to claim 4, **characterised in that** the control device is set in such a manner that it no longer actuates the positioning flap concerned.

6. The system according to claim 4 or 5, **characterised in that** the drive transmission devices (A1, A2) comprise a control function for controlling each flap actuator device, and comprise an electrical or hydraulic coupling of the drive motor for transmitting the drive output.

7. The system according to any one of the preceding claims 4 to 6, **characterised in that** the drive transmission devices (A1, A2) comprise drive shafts for mechanically coupling the drive motor to the flap actuator devices, and the reconfiguration function furthermore comprises a function by means of which in the non-defective state each brake mechanism can be activated, and a comparison between a target command of the drive motor (4) and of the adjustment state measured by means of the drive state sensor is carried out, and if a difference is exceeded, control of the positioning flap concerned is terminated.

8. The system according to any one of the preceding claims 4 to 7, **characterised in that** the reconfiguration function furthermore comprises a comparison function for determining the difference between the desired brake operation state commanded at a brake mechanism and the determined brake operation state, and comprises an error identification function by means of which, in the case of a predetermined differential occurring on a brake mechanism, the "defective" state is allocated to said brake mechanism.

9. The system according to claim 8, **characterised in that** if the "defective" state has been allocated to a brake mechanism, control of said brake mechanism is terminated.

10. The system according to claim 8 or 9, **characterised in that** if the "defective" state has been allocated to a brake mechanism, control of the flap coupling device on the brake mechanism that is assessed to be defective is terminated.

11. The system according to any one of the preceding claims 4 to 10, **characterised in that** the actuators coupled to a positioning flap can be driven by the drive motor and can be controlled individually by the control device for actuating the positioning flap.

12. The system according to any one of the preceding claims 4 to 10, **characterised in that** the actuators coupled to a positioning flap can be driven as a group by the drive motor.

13. The system according to any one of the preceding claims 4 to 12, **characterised in that** the actuator devices (30) are driven by a central drive motor (3), wherein the drive transmission devices are drive shafts (A1, A2).

14. The system according to claim 4 or 13, **characterised in that** the brake intervention sensor is integrated in the brake mechanism.

15. The system according to claim 4 or 14, **characterised in that** the brake intervention sensor is a proximity sensor for acquiring the distance between two braking means.

16. The system according to claim 4 or 15, **characterised in that** the brake intervention sensor comprises a sensor for acquiring an actuating movement and a brake actuation model that is functionally coupled to the aforesaid for the purpose of determining the brake intervention state of the brake mechanism at that time.

17. The system according to claim 4 or 16, **characterised in that** the flap actuator device comprises two load paths for coupling the drive shaft (A1, A2) to the positioning flap.

## Revendications

1. Procédé d'actionnement d'au moins un volet de réglage sur respectivement une aile d'un avion, qui est actionné par au moins deux dispositifs de couplage de volet (11, 12, 13, 14) avec respectivement un dispositif d'entraînement de réglage (30), sachant qu'au moins un dispositif de freinage est disposé sur un dispositif d'entraînement de réglage (30), par volet de réglage, par l'actionnement duquel un état de déplacement du dispositif d'entraînement de réglage (30) respectif peut être bloqué, **caractérisé par** les étapes :
- actionnement de chaque dispositif de freinage d'un volet de réglage individuel,
- ensuite, actionnement du dispositif d'entraînement de réglage au moyen du moteur d'entraînement,
- lors d'une modification de l'état de déplacement du volet réglable d'une dimension prédéterminée, fin de l'actionnement du dispositif d'entraînement de réglage du volet de réglage concerné.

2. Procédé selon la revendication 1, **caractérisé par** les étapes supplémentaires :
- activation de chaque dispositif de freinage si état non défectueux des dispositifs de couplage de volet d'un volet de réglage,
- comparaison d'une commande de consigne pour le moteur d'entraînement (4) et de l'état de déplacement mesuré avec le capteur d'état d'entraînement et
- en cas de dépassement d'une différence, fin de l'actionnement du volet de réglage concerné.

3. Procédé selon la revendication 1 ou 2, **caractérisé par** les étapes supplémentaires :
- exécution d'une comparaison pour calculer une différence entre l'état de service de consigne des freins commandé sur un dispositif de freinage et l'état de service des freins calculé,
- lors de la survenue d'une différence prédéterminée sur un dispositif de freinage, fin de l'actionnement du volet de réglage concerné.

4. Système d'actionnement d'au moins un volet de réglage sur respectivement une aile d'un avion, qui présente
- au moins deux dispositifs de couplage de volet (11, 12, 13, 14) avec respectivement un dispositif d'entraînement de réglage (30), desquels respectivement un est couplé à chacune de deux parties du volet de réglage (S11, S12 ; S21, S22) placées à distance l'une de l'autre vu dans le sens d'envergure,
- un dispositif de freinage au moins sur un dispositif d'entraînement de réglage (30) par volet de réglage, par l'actionnement duquel un état de déplacement du dispositif d'entraînement de réglage (30) respectif peut être bloqué,
- un dispositif d'entraînement de système (3) comprenant un moteur d'entraînement (4), des dispositifs de transmission d'entraînement (A1, A2) qui couplent le moteur d'entraînement (4) aux dispositifs d'entraînement de réglage (30) pour transmettre la puissance de sortie du moteur d'entraînement (4) aux dispositifs d'entraînement de réglage (30), et comprenant un capteur d'état d'entraînement pour calculer un état de déplacement du moteur d'entraînement (4),
- un capteur d'intervention des freins qui est disposé sur au moins un dispositif de freinage d'un volet de réglage pour calculer l'état d'intervention des freins du dispositif de freinage,
- un dispositif de commande avec une fonction de commande pour envoyer des signaux de commande au dispositif d'entraînement du système (3) et pour commander des états d'intervention de consigne des freins aux dispositifs de freinage, avec un appareillage pour recevoir des signaux des dispositifs de capteur des dispositifs d'entraînement de réglage et une fonction de reconfiguration,
**caractérisé en ce que** la fonction de reconfiguration présente une fonction avec laquelle chaque dispositif de freinage d'un volet de réglage peut être actionné individuellement, puis actionne le dispositif d'entraînement de réglage via le moteur d'entraînement et lors du calcul d'une modification de l'état de déplacement d'une dimension prédéterminée via le capteur d'état d'entraînement, attribue l'état « défectueux » aux dispositifs de couplage de volet (11, 12, 13, 14) couplés au volet de réglage ou aux dispositifs de freinage.

5. Système selon la revendication 4, **caractérisé en ce que** le dispositif de commande est ainsi réglé que celui-ci n'actionne plus le volet de réglage concerné.

6. Système selon la revendication 4 ou 5, **caractérisé en ce que** les dispositifs de transmission d'entraînement (A1, A2) présentent une fonction de commande pour commander chaque dispositif d'entraînement de réglage et présentent un couplage électrique ou hydraulique du moteur d'entraînement pour transmettre la puissance d'entraînement.

7. Système selon l'une des revendications précédentes 4 à 6, **caractérisé en ce que** les dispositifs de transmission d'entraînement (A1, A2) présentent des arbres d'entraînement pour le couplage mécanique du moteur d'entraînement aux dispositifs d'entraînement de réglage, et la fonction de reconfiguration présente en outre une fonction avec laquelle l'état non-défectueux de chaque dispositif de freinage peut être activé, et une comparaison d'une commande de consigne du moteur d'entraînement (4) et de l'état de déplacement mesuré avec le capteur d'état d'entraînement est exécutée et, en cas de dépassement d'une différence, il est mis fin à la commande du volet de réglage concerné.

8. Système selon l'une des revendications précédentes 4 à 7, **caractérisé en ce que** la fonction de reconfiguration présente en outre une fonction de comparaison pour calculer une différence entre f des freins commandé sur un dispositif de freinage et l'état de service des freins calculé, et une fonction d'identification d'erreur avec laquelle, lors de la survenue d'une différence prédéterminée sur un dispositif de freinage, celui-ci se voit attribuer l'état « défectueux ».

9. Système selon la revendication 8, **caractérisé en ce que** lors de l'attribution de l'état « défectueux » à un dispositif de freinage, il est mis fin à la commande de ce dispositif de freinage.

10. Système selon la revendication 8 ou 9, **caractérisé en ce que** lors de l'attribution de l'état « défectueux » à un dispositif de freinage, il est mis fin à la commande du dispositif de couplage de volet auquel le dispositif de freinage classé comme défectueux correspond.

11. Système selon l'une des revendications précédentes 4 à 10, **caractérisé en ce que** les entraînements de réglage couplés à un volet de réglage sont entraînés par le moteur d'entraînement et peuvent être commandés individuellement par le dispositif de commande pour actionner le volet de réglage.

12. Système selon l'une des revendications précédentes 4 à 10, **caractérisé en ce que** les entraînements de réglage couplés à un volet de réglage peuvent être entraînés par le moteur d'entraînement en tant que groupe.

13. Système selon l'une des revendications précédentes 4 à 12, **caractérisé en ce que** les dispositifs d'entraînement de réglage (30) sont entraînés par un moteur d'entraînement central (3), sachant que les dispositifs de transmission d'entraînement sont des arbres d'entraînement (A1, A2).

14. Système selon la revendication 4 ou 13, **caractérisé en ce que** le capteur d'intervention des freins est intégré dans le dispositif de freinage.

15. Système selon la revendication 4 ou 14, **caractérisé en ce que** le capteur d'intervention des freins est un capteur d'approche pour détecter la distance de deux moyens de freinage.

16. Système selon la revendication 4 ou 15, **caractérisé en ce que** le capteur d'intervention des freins est un capteur pour détecter un mouvement de déplacement et présente un modèle d'actionnement de frein couplé à celui-ci de manière fonctionnelle pour calculer l'état d'intervention des freins momentané du dispositif de freinage.

17. Système selon la revendication 4 ou 16, **caractérisé en ce que** le dispositif d'entraînement de réglage présente deux tampons de charge pour coupler les dispositifs de transmission d'entraînement (A1, A2) au volet de réglage.
